# EUROPÄISCHE PATENTSCHRIFT

(11) **EP 0 874 790 B1**
(45) Veröffentlichungstag und Bekanntmachung des Hinweises auf die Patenterteilung: **10.05.2000**
(21) Anmeldenummer: 96921031.9
(22) Anmeldetag: 15.07.1996
(51) Int. Cl.: C05F 5/00, C05G 3/00, C05F 15/00

(54) **DÜNGEMITTEL**
FERTILIZER
ENGRAIS

(30) Priorität: 18.01.1996 CZ 15096; 25.01.1996 CZ 22696; 02.02.1996 CZ 30496
(43) Veröffentlichungstag der Anmeldung: 04.11.1998
(73) Patentinhaber: Hofschneider, Miroslav, 798 17 Smrzice (CZ)
(72) Erfinder: Hofschneider, Miroslav, 798 17 Smrzice (CZ)
(74) Vertreter: Jeck, Anton, Dipl.-Ing.
(86) Internationale Anmeldenummer: IB9600689
(87) Internationale Veröffentlichungsnummer: WO9726228

(56) Entgegenhaltungen:
- EP-A- 0 090 091
- WO-A-89/09200
- WO-A-90/02719
- DE-A- 4 324 823
- GB-A- 106 858
- US-A- 5 201 930
- DATABASE WPI Section Ch, Week 9539 Derwent Publications Ltd., London, GB; Class C04, AN 95-294658 XP002015635 & ES,A,2 073 973 (PLYMAG SL) , 16.August 1995
- CHEMICAL ABSTRACTS, vol. 59, no. 6, 16.September 1963 Columbus, Ohio, US; abstract no. 6944d, Y.M. VOZNYAKOVSKAYA: "Selection of microorganisms for use in bacterial fertilizers." XP002015634 & MIKROBIOLOGIYA, Bd. 32, Nr. 1, 1963, Seiten 168-174,

## Beschreibung

Die Erfindung betrifft ein flüssiges organisch-mineralisches Düngemittel gemäß dem Oberbegriff des Anspruchs 1.

Eingedickte Melasseschlempen als Industrieabfall bei der Herstellung von Melasse in Brennereien werden entweder verbrannt oder für die Herstellung von Eiweißkonzentraten bzw. für die Verarbeitung in der Futtermittelindustrie bei der Herstellung von Pellets oder von organisch-mineralischen Düngemitteln verwendet.

Bekannt ist die Lösung gemäß US-A-4,604.125 mit der Verwendung von Melasseschlempen für die energietechnisch und technologisch anspruchsvolle Herstellung von festem mineralischen Düngemittel mit unumgänglicher anschließender Entsorgung von Resten organischen Charakters oder die Lösung gemäß DE-OS 32 11 330 mit der Nutzung einiger Arten von Melasseschlempen, der sog. Vinässen, als zur Zersetzung organischer Materialien dienende Substrate. Mit Hilfe dieser Lösung wird eine Abnahme des Verhältnisses der Elemente Kohlenstoff-Stickstoff im Boden erreicht, und gleichzeitig kommt es zu einer Dotierung von Nährstoffen in einer natürlichen Form. Einen Nachteil bildet der verhältnismäßig große Gehalt von Kalium und ein geringer Gehalt an Phosphor in dem Düngemittel, wodurch es zu einer bedeutenden Beeinflussung des Niveaus dieser Elemente im Boden kommen kann, was unerwünscht ist.

Gemäß CZ 278 603 wird die Zusammensetzung und das Verfahren zur Herstellung eines kompletten organisch-mineralischen Düngemittels auf der Basis von Melasseschlempen, bestehend aus einem Gemisch von eingedickten Schlempen und Ammoniumsalzen der Phosphorsäure oder des Ammoniumnitrates oder des Ammoniumsulfates, gelöst. Dieses Düngemittel enthält die Elemente Stickstoff-Phosphor-Kalium in einem ausgewogenen Verhältnis, ist einfach in der Anwendung als Sprühmittel in Form von Nebelzerstäubung, ökologisch einwandfrei, beschleunigt die Zersetzungsprozesse organischer Stoffe und verbessert gleichzeitig die mechanische Struktur des Bodens. Damit wird die Makro- sowie die Mikroernährung der angebauten Kulturen verbessert.

Die Aufgabe der Erfindung besteht darin, ein Düngemittel der im Oberbegriff des Anspruchs 1 genannten Art zu schaffen, bei dem seine Wirkung auf dem Gebiet der Steigerung der Erträge und der Verbesserung der Qualität der angebauten Kulturen und deren Gesundheitszustand verbessert ist.

Diese Aufgabe wird mit den im Anspruch 1 definierten Merkmalen gelöst.

Ein Düngemittel gemäß dem Merkmalsteil a) des Anspruchs 1 sichert eine bessere Nutzung der Nährstoffe, es erhöht sich die Durchlässigkeit der Pflanzenmembranen; der Metabolismus der Pflanzen, die Photosynthese, die Atmung, die Proteinsynthese und die Aktivität der Pflanzen- und der Bodenenzyme, sowie der Mikroorganismen werden positiv beeinflußt. Gleichzeitig wirkt der höhere Gehalt an Huminverbindungen im Boden positiv auf dessen Struktur und Eigenschaften, beschränkt die Menge der ausgeschwemmten Nährstoffe und erhöht die Feuchtigkeitserhaltungsfähigkeit des Bodens. Das führt zu höheren Erträgen, verbessert die Keimfähigkeit und die Widerstandsfähigkeit der Saat. Da die Humate außerdem die Kadmiumsorption beeinflussen, kommt es zur Unterbrechung der Kadmiumzirkulation in der Nahrungsmittelkette; in die Produkte gelangen entgegen dem ursprünglichen Stand nur etwa 20% Kadmium.

Das flüssige organisch-mineralische Düngemittel eignet sich für eine flächenmäßige sowie für eine örtliche Anwendung der eingedickten Melasseschlempen als Abfall bei der Alkoholherstellung direkt auf die Kulturpflanzen-Grundstücke, dies sowohl zwecks besserer Pflanzenernährung als auch zur Verminderung des Kadmiumgehalts in der menschlichen Nahrung.

Ein Düngemittel gemäß dem Markmalsteil b) des Anspruchs 1 sichert eine bessere Nutzung der Nährstoffe; der Pflanzenmetabolismus, die Photosynthese, die Pflanzenatumung, die Protein- sowie die Sacharidensynthese werden positiv beeinflußt. Das führt zu höheren Erträgen, verbessert die Keimfähigkeit und die Widerstandsfähigkeit der Kulturpflanzensaat.

Das flüssig organisch-mineralische Düngemittel eignet sich für eine flächenmäßige sowie für eine örtliche Anwendung der eingedickten Melasseschlempen als Abfall bei der Alkoholherstellung direkt auf die Kulturpflanzen-Grundstücke, dies sowohl zwecks Eliminierung des Magnesiummangels im Boden als auch für die allgemeine Verbesserung der Pflanzenernährung.

Durch ein Düngemittel gemäß dem Merkmalsteil c) des Anspruchs 1 wird eine bessere Nutzung der Nährstoffe gesichert, und der Matabolismus der Pflanzen, die Photosynthese, die Atmung, die Protein- und Sacharidensynthese werden positiv beeinflußt. Insbesondere wird der Stickstoff aus der Luft zufriedenstellend genutzt und das utilisierte Phosphor freigesetzt. Damit werden die Erträge erhöht, die Keimfähigkeit und die Widerstandsfähigkeit der Kulturpflanzensaat verbessert.

Das flüssig organisch-mineralische Düngemittel eignet sich für eine flächenmäßige sowie eine örtliche Anwendung der eingedickten Melasseschlempen als Abfall bei der Alkoholherstellung direkt auf die Grundstücke mit Kulturpflanzen zwecks Sicherung einer besseren Nutzung der Nährstoffe aus dem Boden, der Erreichung einer höheren Widerstandsfähigkeit der Pflanzen gegen Krankheiten und der Gesamtverbesserung der Pflanzenernährung.

Bevorzugte Zusammensetzungen des Düngemittels sind in den Unteransprüchen angegeben.

Die Erfindung wird nun anhand von Ausführungsbeispielen näher erläutert.

### Beispiel I

Für einen Boden mit geringerem Nährstoffstand, Hauptfrucht Sommergerste, wurden insgesamt 2 Tonnen flüssigen organisch-mineralischen Düngemittels so zubereitet, daß nach der Herstellung der Grundkomponente des Düngemittels nach dem Verfahren gemäß Patent CZ 278 603 an die Menge von 1980kg eine Lösung Kaliumhumat beigegeben wurde, die so zubereitet war, daß in 198kg Wasser 2kg Kaliumhumat aufgelöst wurden; unter ständigem Rühren wurden beide Lösungen innerhalb von 15 Minuten homogenisiert und anschließend in einem Transportbehälter auf das Feld gebracht, mit einem Spezialsprüher auf den Boden gesprüht und anschließend eingedrillt. Mit der genannten Dosis wurde 1ha Boden bei einem Druck in den Sprühdüsen von 0,3 bis 0,5MPa gedüngt.

Nach der Ernteauswertung wurde festgestellt, daß der Sommergersteertrag im Vergleich zur Kontrollparzelle ohne Humatverwendung um ca. 0,4t/ha höher war, was einen relativen Anwuchs von 7% bei gleichzeitiger Erhöhung der Körneranzahl in der Ähre um 8% darstellt. Außerdem stieg der Stärkegehalt im Korn bei gleichzeitiger Verringerung des Eiweißgehaltes um 9% an.

### Beispiel II

Bei gleichen Bodenverhältnissen und für die gleiche Frucht wie im Beispiel Nr. I wurde bei dem verwendeten Düngemittel das Kaliumhumat durch Natriumhumat ersetzt. Bei der Ernteauswertung konnte die gleiche Steigerung der Ertragskennziffern sowie der Qualitätskennziffern festgestellt werden; außerdem wurde bei der Ermittlung des Kadmiumgehaltes in der gesamten Pflanze festgestellt, daß das Kadmium sich hauptsächlich in den Wurzeln, weniger im Stroh und am wenigsten im Korn angesammelt hat. Im Vergleich zur Kontrollvariante der Kultur ohne Humatanwendung betrug die Kadmiumkumulation im Korn lediglich 21%, im Stroh 52% des Vergleichswertes.

### Beispiel III

Für einen Boden mit geringerem Nährstoffstand, Hauptfrucht; Sommergerste, wurden insgesamt 2 Tonnen flüssigen organisch-mineralischen Düngemittels so vorbereitet, daß nach der Herstellung von 1800kg der Grundkomponente des Düngemittels nach dem Verfahren gemäß Patent CZ 278 603 dieser Menge eine Lösung Magnesiumnitrat beigegeben wurde, die so zubereitet war, daß in 126kg Wasser 74kg Magnesiumnitrat aufgelöst wurden; unter ständigem Rühren wurden beide Lösungen innerhalb von 15 Minuten homogenisiert, was ein Düngemittel mit folgendem Gehalt an reinen Nährstoffen in 1 t ergab: N - 20kg, P₂O₅ - 16kg, K₂O - 28kg und MgO - 10kg. Dieses Düngemittel wurde mit Hilfe eines Transportbehälters auf das Feld gebracht, mit einem Spezialsprüher auf den Boden gesprüht und anschließend eingedrillt. Mit der genannten Dosis wurde 1ha Boden bei einem Druck in den Sprühdüsen von 0,3 bis 0,5MPa gedüngt.

### Beispiel IV

Für einen Boden mit einem mittleren bis höheren Nährstoffgehalt wurde nach ermitteltem Gehalt an Grundelementen P - 94mg/kg, K - 140mg/kg, Mg - 87mg/kg, Ca - 2460mg/kg 3t organisch-mineralischen Düngemittels mit Magnesium so zubereitet, daß zu 2700kg Düngemittel mit einer Zusammensetzung entsprechend dem Patent CZ 278 603 allmählich 300kg einer Magnesiumsulfat-Wasserlösung beigemischt wurde, die 210kg Wasser und 90kg Magnesiumsulfat enthielt. Die erhaltene Dosis von 3 t Düngemittel, versprüht auf eine Fläche von 1ha, enthielt in der Umrechnung auf reine Nährstoffe folgende Mengen von Grundelementen: N - 67,5kg, P₂O₅ - 54kg, K₂O - 94kg und MgO - 33kg.

### Beispiel V

Für einen Boden mit geringerem Nährstoffbestand, Hauptfrucht Sommergerste, wurden insgesamt 2 Tonnen flüssigen organisch-mineralischen Düngemittels so hergestellt, daß nach der Erzeugung des Düngemittel-Grundbestandteiles gemäß dem Patent CZ 278 603 in einer Menge von 1800kg diesem eine Lösung beigegeben wurde, die Bakterien der Gattung Azotobacter und Bacillus Megatherium zusammen mit pflanzlichen Hormonen Gibberallin und Heteroauxin enthielt und so zubereitet war, daß in 196kg Wasser 4kg der oben genannten Ergänzungskomponenten zerstreut waren. Unter ständigem Rühren wurde beide Lösungen innerhalb von 15 Minuten homogenisiert, wobei ein ökologisches Düngemittel entstand, das, umgerechnet auf das Äquivalent reiner Nährstoffe, folgende Substanzen enthielt: N - 70kg, P₂O₅ - 44kg, K₂O - 70kg.

Dieses Düngemittel wurde mit Hilfe eines Transportbehälters auf das Feld gebracht, mit Hilfe eines Spezialsprühers auf dem Boden versprüht und anschließend eingedrillt. Mit dieser Dosis wurde 1ha Boden bei einem Druck in den Sprühdüsen von 0,3 bis 0,5MPa gedüngt.

### Beispiel VI

Für einen Boden mit geringerem Nährstoffbestand wurde nach ermittelten Gehalt an Grundelementen (P - 75mg/kg, K - 120mg/kg, Mg - 83mg/kg, Ca - 2360mg/kg) für die Hauptfrucht Winterweizen 1 Tonne organisch-mineralischen Düngemittels so zubereitet, daß zu 900kg Düngemittel mit einer Zusammensetzung gemäß Patent CZ 278 603 nach und nach 100kg Lösung beigemischt wurde, welche 98 kg Wasser und 2 kg Bakterien-, Hormone- und Vitaminkomponente enthielt. Die so gewonnene Dosis in Höhe von 1 Tonne, angewendet auf 1 ha Boden, enthielt, umgerechnet auf das Äquivalent reiner Nährstoffe, folgende Mengen von Grundelementen: N - 69kg, P₂O₅ - 43kg, K₂O - 70kg.

## Patentansprüche

1. Flüssiges organisch-mineralisches Düngemittel mit einer Dichte von 1,15 bis 1,40g/ml auf der Basis von Melasseschlempen oder eines flüssigen Gemisches von eingedickten Melasseschlempen und Ammoniumsalzen der Phosphorsäure oder des Ammoniumnitrates oder des Ammoniumsulfates,
dadurch gekennzeichnet, daß
a) es zu 40 bis 98 Massen-% aus Melasseschlempen oder aus einem flüssigen Gemisch von Melasseschlempen und Ammoniumsalzen und zu 59,60 bis 1,95 Massen-% aus Wasser und zu 0,4 bis 0,05 Massen-% aus Natriumhumat oder Kaliumhumat oder aus Huminsäuren oder deren Gemischen besteht oder
b) es zu 40 bis 90 Massen-% aus Melasseschlempen oder aus einem flüssigen Gemisch von Melasseschlempen und Ammoniumsalzen, zu 58,50 bis 4,45 Massen-% aus Wasser und zu 1,50 bis 5,55 Massen-% aus Magnesiumsulfat oder Magnesiumnitrat oder aus deren Gemischen besteht oder
c) es sich zu 40 bis 97 Massen-% aus Melasseschlempen oder aus einem flüssigen Gemisch von Melasseschlempen und Ammoniumsalzen, zu 58,50 bis 2,80 Massen-% aus Wasser und zu 1,50 bis 0,20 Massen-% aus einer Lösung, die entweder einzeln oder
im Gemisch Bakterien der Gattung Azotobacter sp., max. 3,4.10⁷ oder Bacillus megatherium, max. 2,5.10⁸ und/oder Pflanzenhormone Gibberallin oder Heteroauxin und/oder Vitamine der Gruppe B enthält, zusammensetzt.

2. Düngemittel nach Anspruch 1,
dadurch gekennzeichnet,
daß die Grundkomponente mit 9,9% Wasser und 0,1% Kaliumhumat oder Natriumhumat versetzt ist.

3. Düngemittel nach Anspruch 1,
dadurch gekennzeichnet,
daß die Grundkomponente mit 6,3% Wasser und 3,7% Magnesiumnitrat versetzt ist.

4. Düngemittel nach Anspruch 1,
dadurch gekennzeichnet,
daß die Grundkomponente mit 7,2% Wasser und 3,1% Magnesiumsulfat versetzt ist.

5. Düngemittel nach Anspruch 1,
dadurch gekennzeichnet,
daß die Grundkomponente mit 9,8% Wasser und 0,2% der Komponenten Azotobacter, Bacillus megatherium und Hormonen Gibberallin und Heteroauxin versetzt ist.

6. Düngemittel nach Anspruch 1,
dadurch gekennzeichnet,
daß die Grundkomponente mit 9,8% Wasser und 0,2% der Komponenten Azotobacter, Hormonen Gibberallin und Heteroauxin und Vitaminen der Gruppe B versetzt ist.

## Claims

1. Liquid, organic-mineral fertiliser, having a density of 1.15 to 1.40 g/ml based on molasses residues or a liquid mixture of thickened molasses residues and ammonium salts of phosphoric acid or ammonium nitrate or ammonium sulphate, characterised in that
a) it comprises 40 to 98% by weight of molasses residues or a liquid mixture of molasses residues and ammonium salts, 59.60 to 1.95% by weight of water and 0.4 to 0.05% by weight of sodium humate or potassium humate or humic acids or mixtures thereof, or
b) it comprises 40 to 90% by weight of molasses residues or a liquid mixture of molasses residues and ammonium salts, 58.50 to 4.45% by weight of water and 1.50 to 5.55% by weight of magnesium sulphate or magnesium nitrate or mixtures thereof, or
c) it comprises 40 to 97% by weight of molasses residues or a liquid mixture of molasses residues and ammonium salts, 58.50 to 2.80% by weight of water and 1.50 to 0.20% by weight of a solution which contains, either alone or in a mixture, bacteria of the genus Azotobacter sp., max. 3.4x10⁷ or Bacillus megatherium, max. 2.5x10⁸ and/or plant hormones gibberallin or heteroauxin and/or vitamins of group B.

2. Fertiliser according to claim 1, characterised in that the basic component is mixed with 9.9% water and 0.1% potassium humate or sodium humate.

3. Fertiliser according to claim 1, characterised in that the basic component is mixed with 6.3% water and 3.7% magnesium nitrate.

4. Fertiliser according to claim 1, characterised in that the basic component is mixed with 7.2% water and 3.1% magnesium sulphate.

5. Fertiliser according to claim 1, characterised in that the basic component is mixed with 9.8% water and 0.2% of the components Azotobacter, Bacillus megatherium and hormones gibberallin and heteroauxin.

6. Fertiliser according to claim 1, characterised in that the basic component is mixed with 9.8% water and 0.2% of the components Azotobacter, hormones gibberallin and heteroauxin and vitamins of group B.

## Revendications

1. Engrais organique-minéral liquide d'une densité de 1,15 à 1,40 g/ml à base de vinasses de mélasse ou d'un mélange liquide de vinasses de mélasse épaissies et de sels d'ammonium de l'acide phosphorique ou du nitrate d'ammonium ou du sulfate d'ammonium,
caractérisé en ce que
a) il est constitué de 40 à 98 % en masse de vinasses de mélasse ou d'un mélange liquide de vinasses de mélasse et de sels d'ammonium et de 59,60 à 1,95 % en masse d'eau et de 0,4 à 0,005 % en masse de humate de sodium ou de humate de calcium ou d'acide huminiques ou de leurs mélanges, ou
b) il est constitué de 40 à 90 % en masse de vinasses de mélasse ou d'un mélange liquide de vinasses de mélasse et de sels d'ammonium, de 58,50 à 4,45 % en masse d'eau et de 1,50 à 5,55 % en masse de sulfate de magnésium ou de nitrate de magnésium ou de leurs mélanges, ou
c) il est constitué de 40 à 97 % en masse de vinasses de mélasse ou d'un mélange liquide de vinasses de mélasse et de sels d'ammonium, de 58,50 à 2,80 % en masse d'eau et de 1,50 à 0,20 % en masse d'une solution qui soit isolément, soit en mélange comprend des bactéries de la souche azotobacter sp., max. 3,3.10⁷ ou Bacillus megatherium, max. 3,3.10⁸ et/ou les hormones végétales gibbéralline ou hétéroauxine et/ou des vitamines du groupe B.

2. Engrais suivant la revendication 1,
caractérisé
en ce qu'à la composante de base est additionné 9,9 % d'eau et 0,1 % de humate de potassium.

3. Engrais suivant la revendication 1,
caractérisé
en ce qu'à la composante de base est additionné 6,3 % d'eau et 3,7 % de nitrate de magnésium.

4. Engrais suivant la revendication 1,
caractérisé
en ce qu'à la composante de base est additionné 7,2 % d'eau et 3,1 % de sulfate de magnésium.

5. Engrais suivant la revendication 1,
caractérisé
en ce qu'à la composante de base est additionné 9,8 % d'eau et 0,2 % des composantes Azotobacter, Bacillus megatherium, hormones gibbéralline et hétéroauxine.

6. Engrais suivant la revendication 1,
caractérisé
en ce qu'à la composante de base est additionné 9,8 % d'eau et 0,2 % des composantes Azotobacter, hormones gibbéralline et hétéroauxine et vitamines du groupe B.
